# EUROPEAN PATENT APPLICATION

(11) **EP 4 531 296 A1**
(43) Date of publication of application: **02.04.2025**
(21) Application number: 23200967.0
(22) Date of filing: 29.09.2023
(51) Int. Cl.: H04B 7/06, G06N 3/08, H04L 25/02

(54) **MACHINE LEARNING -BASED GENERATION OF BEAMFORMING COEFFICIENTS BY UTILIZING PRIOR RADIO CHANNEL RELATED INFORMATION, AND RELATED DEVICES, METHODS AND COMPUTER PROGRAMS**

(71) Applicant: Nokia Solutions and Networks Oy, 02610 Espoo (FI)
(72) Inventor: HUTTUNEN, Janne Matti Juhani, Espoo (FI); HONKALA, Mikko Johannes, Espoo (FI); KORPI, Dani Johannes, Tampere (FI)
(74) Representative: Nokia EPO representatives

(57) **Abstract**

Devices, methods and computer programs for machine learning -based generation of beamforming coefficients by utilizing prior radio channel related information are disclosed. At least some example embodiments may allow reducing the amount of historical information to be fed to a neural beamformer or machine learning - based beamformer to reduce computational complexity and memory requirements.

## Description

### TECHNICAL FIELD

The disclosure relates generally to communications and, more particularly but not exclusively, to machine learning - based generation of beamforming coefficients by utilizing prior radio channel related information, as well as related devices, methods and computer programs.

### BACKGROUND

Nowadays, base stations are typically equipped with an array of multiple antennas. The radiation pattern of such an antenna array may be flexibly adjusted by tuning amplitudes and phases of each antenna signal. This makes it possible to direct a wireless signal towards receiving devices. This is referred to as beamforming.

However, at least in some situations, it may be difficult to perform accurate beamforming when a channel is not static and can change significantly between uplink and downlink time slots. For example, the channel may experience aging, when a user equipment or objects between the user equipment and a base station are moving. In such a case, the performance of a beamforming algorithm may be suboptimal or it may not work at all. Furthermore, when a channel estimate is inaccurate, it may be difficult to compensate for the errors in such an inaccurate channel estimate.

### BRIEF SUMMARY

The scope of protection sought for various example embodiments of the invention is set out by the independent claims. The example embodiments and features, if any, described in this specification that do not fall under the scope of the independent claims are to be interpreted as examples useful for understanding various example embodiments of the invention.

An example embodiment of a radio transmitter device comprises at least one processor, and at least one memory storing instructions that, when executed by the at least one processor, cause the radio transmitter device at least to perform obtaining a most recent channel estimate formed based on a most recent reference signal transmission over an uplink, UL, radio channel. The instructions, when executed by the at least one processor, further cause the radio transmitter device at least to perform obtaining a set of prior channel estimates comprising channel estimates formed based on at least one prior reference signal transmission over the UL radio channel that is earlier than the most recent reference signal transmission. The instructions, when executed by the at least one processor, further cause the radio transmitter device at least to perform generating an auxiliary data set representing one or more auxiliary channel characteristics of the radio channel via applying a first neural network, NN, to at least a part of the obtained set of prior channel estimates. The instructions, when executed by the at least one processor, further cause the radio transmitter device at least to perform generating a set of downlink, DL, beamforming coefficients for the radio channel via applying a second NN to the generated auxiliary data set and the obtained most recent channel estimate. The first NN is configured to extract information related to the one or more auxiliary channel characteristics of the radio channel from the obtained set of prior channel estimates.

In an example embodiment, alternatively or in addition to the above-described example embodiments, the channel estimates in the set of prior channel estimates comprise at least channel estimate averages over one or more subcarriers of the at least one prior reference signal transmission.

In an example embodiment, alternatively or in addition to the above-described example embodiments, the at least one prior reference signal transmission comprises a sounding reference signal, SRS, transmission.

In an example embodiment, alternatively or in addition to the above-described example embodiments, the auxiliary data set has dimensions smaller than dimensions of a full channel estimate.

In an example embodiment, alternatively or in addition to the above-described example embodiments, the auxiliary data set comprises a vector with the dimensions smaller than the dimensions of the full channel estimate.

In an example embodiment, alternatively or in addition to the above-described example embodiments, the applying of the first NN to the at least part of the obtained set of prior channel estimates to generate the auxiliary data set comprises applying the first NN to a subset of the obtained set of prior channel estimates.

In an example embodiment, alternatively or in addition to the above-described example embodiments, the auxiliary channel characteristics of the radio channel comprise velocity estimates of one or more client devices transmitting the reference signals.

In an example embodiment, alternatively or in addition to the above-described example embodiments, the instructions, when executed by the at least one processor, further cause the radio transmitter device to perform applying the first NN to environmental information related to at least one of the radio channel or one or more client devices transmitting the reference signals, when generating the auxiliary data set.

In an example embodiment, alternatively or in addition to the above-described example embodiments, the first NN comprises at least one of a convolutional neural network, CNN, a transformer network, or a recurrent neural network, RNN, or a combination thereof.

In an example embodiment, alternatively or in addition to the above-described example embodiments, the second NN comprises at least one of a convolutional neural network, a transformer neural network, or a combination thereof.

In an example embodiment, alternatively or in addition to the above-described example embodiments, at least one of the first NN or the second NN utilizes one or more depthwise separable convolutions.

In an example embodiment, alternatively or in addition to the above-described example embodiments, the instructions, when executed by the at least one processor, further cause the radio transmitter device to perform concurrent training of the first NN and the second NN via applying a cross-entropy loss measuring DL performance of one or more client devices transmitting the reference signals.

An example embodiment of a method comprises obtaining, by a radio transmitter device, a most recent channel estimate formed based on a most recent reference signal transmission over an uplink, UL, radio channel. The method further comprises obtaining, by the radio transmitter device, a set of prior channel estimates comprising channel estimates formed based on at least one prior reference signal transmission over the UL radio channel that is earlier than the most recent reference signal transmission. The method further comprises generating, by the radio transmitter device, an auxiliary data set representing one or more auxiliary channel characteristics of the radio channel via applying a first neural network, NN, to at least a part of the obtained set of prior channel estimates. The method further comprises generating, by the radio transmitter device, a set of downlink, DL, beamforming coefficients for the radio channel via applying a second NN to the generated auxiliary data set and the obtained most recent channel estimate. The first NN is configured to extract information related to the one or more auxiliary channel characteristics of the radio channel from the obtained set of prior channel estimates.

In an example embodiment, alternatively or in addition to the above-described example embodiments, the channel estimates in the set of prior channel estimates comprise at least channel estimate averages over one or more subcarriers of the at least one prior reference signal transmission.

In an example embodiment, alternatively or in addition to the above-described example embodiments, the at least one prior reference signal transmission comprises a sounding reference signal, SRS, transmission.

In an example embodiment, alternatively or in addition to the above-described example embodiments, the auxiliary data set has dimensions smaller than dimensions of a full channel estimate.

In an example embodiment, alternatively or in addition to the above-described example embodiments, the auxiliary data set comprises a vector with the dimensions smaller than the dimensions of the full channel estimate.

In an example embodiment, alternatively or in addition to the above-described example embodiments, the applying of the first NN to the at least part of the obtained set of prior channel estimates to generate the auxiliary data set comprises applying the first NN to a subset of the obtained set of prior channel estimates.

In an example embodiment, alternatively or in addition to the above-described example embodiments, the auxiliary channel characteristics of the radio channel comprise velocity estimates of one or more client devices transmitting the reference signals.

In an example embodiment, alternatively or in addition to the above-described example embodiments, the method further comprises applying, by the radio transmitter device, the first NN to environmental information related to at least one of the radio channel or one or more client devices transmitting the reference signals, when generating the auxiliary data set.

In an example embodiment, alternatively or in addition to the above-described example embodiments, the first NN comprises at least one of a convolutional neural network, CNN, a transformer network, or a recurrent neural network, RNN, or a combination thereof.

In an example embodiment, alternatively or in addition to the above-described example embodiments, the second NN comprises at least one of a convolutional neural network, a transformer neural network, or a combination thereof.

In an example embodiment, alternatively or in addition to the above-described example embodiments, at least one of the first NN or the second NN utilizes one or more depthwise separable convolutions.

In an example embodiment, alternatively or in addition to the above-described example embodiments, the method further comprises performing, by the radio transmitter device, concurrent training of the first NN and the second NN via applying a cross-entropy loss measuring DL performance of one or more client devices transmitting the reference signals.

An example embodiment of an apparatus comprises means for carrying out a method according to any of the above-described example embodiments.

An example embodiment of a computer program comprises instructions for causing a radio transmitter device to perform at least the following: obtaining a most recent channel estimate formed based on a most recent reference signal transmission over an uplink, UL, radio channel; obtaining a set of prior channel estimates comprising channel estimates formed based on at least one prior reference signal transmission over the UL radio channel that is earlier than the most recent reference signal transmission; generating an auxiliary data set representing one or more auxiliary channel characteristics of the radio channel via applying a first neural network, NN, to at least a part of the obtained set of prior channel estimates; and generating a set of downlink, DL, beamforming coefficients for the radio channel via applying a second NN to the generated auxiliary data set and the obtained most recent channel estimate. The first NN is configured to extract information related to the one or more auxiliary channel characteristics of the radio channel from the obtained set of prior channel estimates.

### DESCRIPTION OF THE DRAWINGS

The accompanying drawings, which are included to provide a further understanding of the embodiments and constitute a part of this specification, illustrate embodiments and together with the description help to explain the principles of the embodiments. In the drawings:
**FIG. 1** shows an example embodiment of the subject matter described herein illustrating an example system, where various embodiments of the present disclosure may be implemented;
**FIG. 2** shows an example embodiment of the subject matter described herein illustrating a radio transmitter device;
**FIG. 3** shows an example embodiment of the subject matter described herein illustrating examples of uplink slots and their disclosed use;
**FIG. 4** shows an example embodiment of the subject matter described herein illustrating a first disclosed example architecture;
**FIG. 5** shows an example embodiment of the subject matter described herein illustrating a second disclosed example architecture; and
**FIG. 6** shows an example embodiment of the subject matter described herein illustrating a disclosed method for a radio transmitter device.

Like reference numerals are used to designate like parts in the accompanying drawings.

### DETAILED DESCRIPTION

Reference will now be made in detail to embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

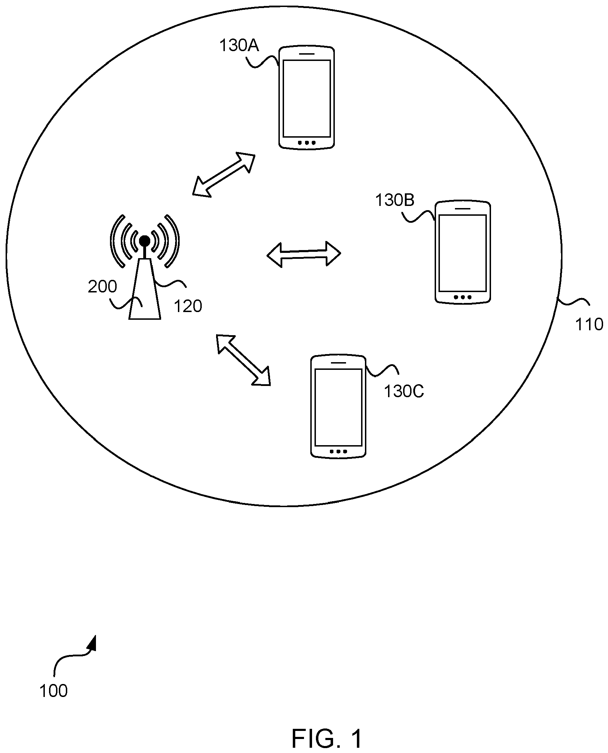

Fig. 1 illustrates example system 100, where various embodiments of the present disclosure may be implemented. The system 100 may comprise a fifth generation (5G) new radio (NR) network or a network beyond 5G wireless networks, 110. An example representation of system 100 is shown depicting network node device 120 and client devices 130A, 130B, 130C. At least in some embodiments, network 110 may comprise one or more massive machine-to-machine (M2M) network(s), massive machine type communications (mMTC) network(s), internet of things (IoT) network(s), industrial internet-of-things (IIoT) network(s), enhanced mobile broadband (eMBB) network(s), ultra-reliable low-latency communication (URLLC) network(s), and/or the like. In other words, network 110 may be configured to serve diverse service types and/or use cases, and it may logically be seen as comprising one or more networks.

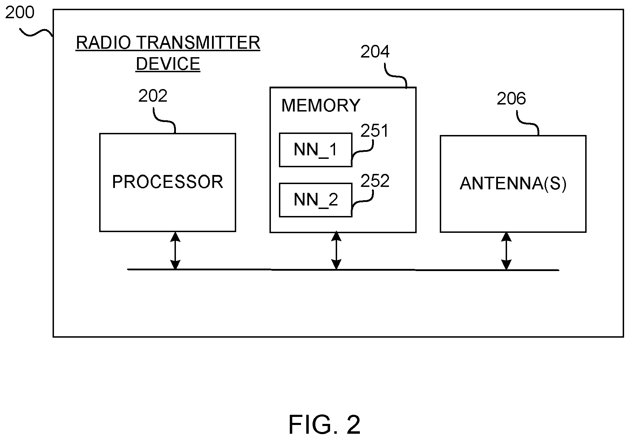

Client device 130 may include, e.g., a mobile phone, a smartphone, a tablet computer, a smart watch, or any hand-held, portable and/or wearable device. Client device 130 may also be referred to as a user equipment (UE). Network node device 120 may comprise, e.g., a base station. The base station may include, e.g., any device suitable for providing an air interface for client devices to connect to a wireless network via wireless transmissions. Furthermore, network node device 120 may comprise radio transmitter device 200 of Fig. 2.

In the following, various example embodiments will be discussed. At least some of these example embodiments described herein may allow machine learning -based generation of beamforming coefficients by utilizing prior radio channel related information.

Furthermore, at least some of the example embodiments described herein may allow reducing the amount of historical information to be fed to a neural beamformer or machine learning -based beamformer to reduce computational complexity and memory requirements.

Furthermore, at least some of the example embodiments described herein may allow extracting low-dimensional information from history for a neural beamformer.

Furthermore, at least some of the example embodiments described herein may allow processing and utilizing the low-dimensional information in a way that is beneficial for beamforming performance.

Furthermore, at least some of the example embodiments described herein may allow using same low-dimensional information for all downlink slots.

Furthermore, at least some of the example embodiments described herein may allow result in that only a small amount of information from historical channel estimates is needed. This may significantly reduce memory requirements and computational complexity.

Fig. 2 is a block diagram of radio transmitter device 200, in accordance with an example embodiment. For example, radio transmitter device 200 may be comprised in network node device 120.

Radio transmitter device 200 comprises one or more processors 202 and one or more memories 204 that comprise computer program code. Radio transmitter device 200 may be configured to transmit information to other devices. In one example, radio transmitter device 200 may transmit signalling information and data in accordance with at least one cellular communication protocol. Radio transmitter device 200 may be configured to provide at least one wireless radio connection, such as for example a 3GPP mobile broadband connection (e.g., 5G or 6G). Radio transmitter device 200 may comprise, or be configured to be coupled to, at least one antenna 206 to transmit radio frequency signals. Radio transmitter device 200 may also include other elements not shown in Fig. 2.

Although radio transmitter device 200 is depicted to include only one processor 202, radio transmitter device 200 may include more processors. In an embodiment, memory 204 is capable of storing instructions, such as an operating system and/or various applications. Furthermore, memory 204 may include a storage that may be used to store, e.g., at least some of the information and data used in the disclosed embodiments, such as first neural network (NN) 251, 251A, 251B and/or second NN 252, 252A, 252B described in more detail below.

Furthermore, processor 202 is capable of executing the stored instructions. In an embodiment, processor 202 may be embodied as a multi-core processor, a single core processor, or a combination of one or more multi-core processors and one or more single core processors. For example, processor 202 may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, a neural network (NN) chip, an artificial intelligence (AI) accelerator, a tensor processing unit (TPU), a neural processing unit (NPU), or the like. In an embodiment, processor 202 may be configured to execute hard-coded functionality. In an embodiment, processor 202 is embodied as an executor of software instructions, wherein the instructions may specifically configure processor 202 to perform the algorithms and/or operations described herein when the instructions are executed.

Memory 204 may be embodied as one or more volatile memory devices, one or more non-volatile memory devices, and/or a combination of one or more volatile memory devices and non-volatile memory devices. For example, memory 204 may be embodied as semiconductor memories (such as mask ROM, PROM (programmable ROM), EPROM (erasable PROM), flash ROM, RAM (random access memory), etc.).

When executed by at least one processor 202, instructions stored in at least one memory 204 cause radio transmitter device 200 at least to perform obtaining a most recent channel estimate formed based on a most recent reference signal transmission over an uplink (UL) radio channel.

The instructions, when executed by at least one processor 202, further cause radio transmitter device 200 at least to perform obtaining a set of prior channel estimates comprising channel estimates formed based on at least one prior reference signal transmission over the UL radio channel that is earlier than the most recent reference signal transmission.

At least in some embodiments, the reference signals may be transmitted by one or more client devices 130A, 130B, 130C. For example, the at least one prior reference signal transmission may comprise a sounding reference signal (SRS) transmission.

At least in some embodiments, the channel estimates in the set of prior channel estimates may comprise at least channel estimate averages over one or more subcarriers of the at least one prior reference signal transmission. Herein, "averaging" may include, e.g., filtering and averaging, as well as weighted averages.

The instructions, when executed by at least one processor 202, further cause radio transmitter device 200 at least to perform generating an auxiliary data set representing one or more auxiliary channel characteristics of the radio channel via applying first neural network (NN) 251, 251A, 251B to at least a part of the obtained set of prior channel estimates. First NN 251, 251A, 251B is configured to extract information related to the one or more auxiliary channel characteristics of the radio channel from the obtained set of prior channel estimates.

For example, first NN 251, 251A, 251B may comprise a convolutional neural network (CNN), a transformer network, and/or a recurrent neural network (RNN), and/or a combination thereof. For example, first NN 251, 251A, 251B when implemented as a CNN may include three ResNet blocks with 32 filters in each convolution. In another example, first NN 251, 251A, 251B may include a neural network with, e.g., five layers and 64 channels.

At least in some embodiments, the auxiliary data set may have dimensions smaller than dimensions of a full channel estimate. For example, the auxiliary data set may comprise a vector with the dimensions smaller than the dimensions of a full channel estimate. For example, the dimensions of the auxiliary data set may range from approximately ten to approximately fifty.

In other words, the auxiliary data set may be low-dimensional compared to a full channel estimate (such as the full prior channel estimates). For example, first NN 251, 251A, 251B may process SRS channel information that are averages over one or two physical resource blocks (PRBs). In the latter case, the amount of data to be saved may be, e.g., 14/2 x 4 x 2 when the number of PRBs is 14, which is significantly less than saving full UL channel estimates for a whole transmission time interval (TTI) which would result in, e.g., 14 x 12 x 4 x 2 as the amount of data to be saved.

At least in some embodiments, the applying of first NN 251, 251A, 251B to the at least part of the obtained set of prior channel estimates to generate the auxiliary data set may comprise applying first NN 251, 251A, 251B to a subset of the obtained set of prior channel estimates.

For example, the auxiliary channel characteristics of the radio channel may comprise velocity estimates of one or more client devices 130A, 130B, 130C transmitting the reference signals.

At least in some embodiments, the instructions, when executed by at least one processor 202, may further cause radio transmitter device 200 to perform applying first NN 251, 251A, 251B to environmental information (such as a signal-to-noise ratio (SNR), or estimates of doppler spread, delay spread, and/or channel variation in time) related to at least one of the radio channel or one or more client devices 130A, 130B, 130C transmitting the reference signals, when generating the auxiliary data set.

The instructions, when executed by at least one processor 202, further cause radio transmitter device 200 at least to perform generating a set of downlink (DL) beamforming coefficients for the radio channel via applying second NN 252, 252A, 252B to the generated auxiliary data set and the obtained most recent channel estimate.

At least in some embodiments, second NN 252, 252A, 252B may comprise a neural beamformer which takes channel information as input and produces beamforming coefficients as output (or alternatively the output may be fed to a zero-forcing beamformer). The neural beamformer may be trained, e.g., such that a loss function is formed based on client device performance in DL, and the loss function is minimized.

For example, second NN 252, 252A, 252B may comprise a CNN, and/or a transformer neural network, and/or a combination thereof.

At least in some embodiments, first NN 251, 251A, 251B and/or second NN 252, 252A, 252B may utilize one or more depth-wise separable convolutions.

At least in some embodiments, the instructions, when executed by at least one processor 202, may further cause radio transmitter device 200 to perform concurrent training of first NN 251, 251A, 251B and second NN 252, 252A, 252B via applying a cross-entropy loss measuring DL performance of one or more client devices 130A, 130B, 130C transmitting the reference signals.

In the following examples, F and S represent the number of subcarriers and symbols in a slot, respectively, N_{R} represents the number of antennas in the network node 120, N_{T} represents the number of multiple-input and multiple-output (MIMO) layers, N_{b} represents the number of bits per symbol, F_{SB} represents the number of sub-carriers in a selected sub-band, W represents beamforming weights or coefficients, and Hest represents the UL channel estimate.

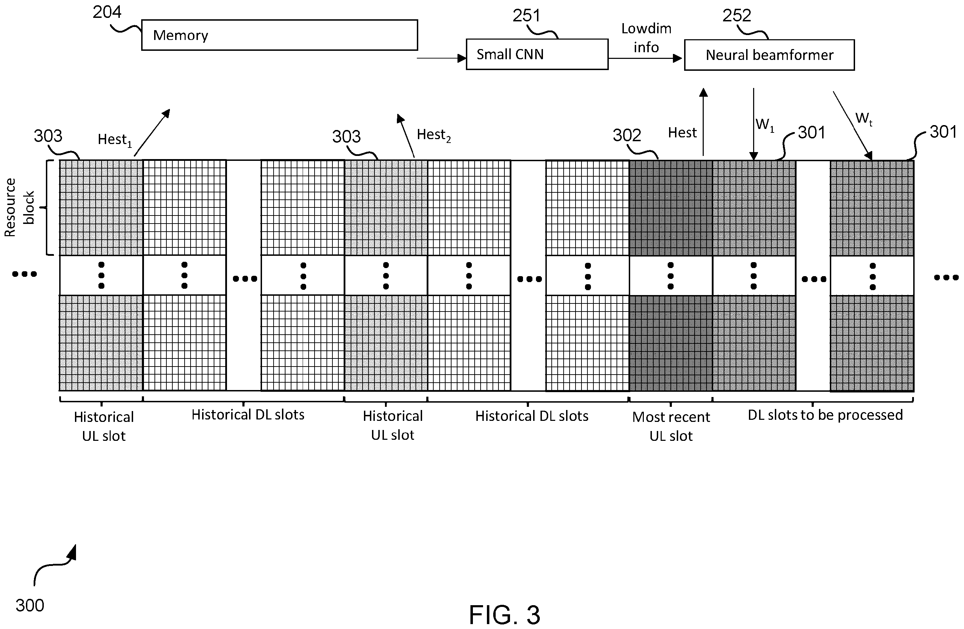

Diagram 300 of Fig. 3 illustrates examples of uplink slots and their disclosed use.

DL slots 301 represent DL slots to be processed for beamforming. When prior UL slots 303 (e.g., resource elements (REs) carrying pilots, such as SRSs) are processed, the channel estimates may be stored, e.g., in memory 204. These channel estimates may be processed using, e.g., CNN 251 to produce an additional low-dimensional vector that may represent information, such as speed. This low-dimensional information may be fed to, e.g., neural beamformer 252 together with a most recent channel estimate based on slot 302. Neural beamformer 252 output (beamforming weights W) may then be used for the beamforming. At least in some embodiments, SRSs may also be collected during a so called special slot which includes both a downlink and uplink transmission.

As discussed above, at least in some embodiments, the input to CNN 251 does not need to be a full-band channel estimate. Instead, e.g., averages over PRBs may be enough to obtain sufficient results when neural beamformer 252 is configured to process eight PRBs, for example. At least in some embodiments, this may alleviate memory and input/out requirements considerably.

When additional information, such as velocity or environmental information is available, they may also be used as inputs for CNN 251 in addition to the channel information.

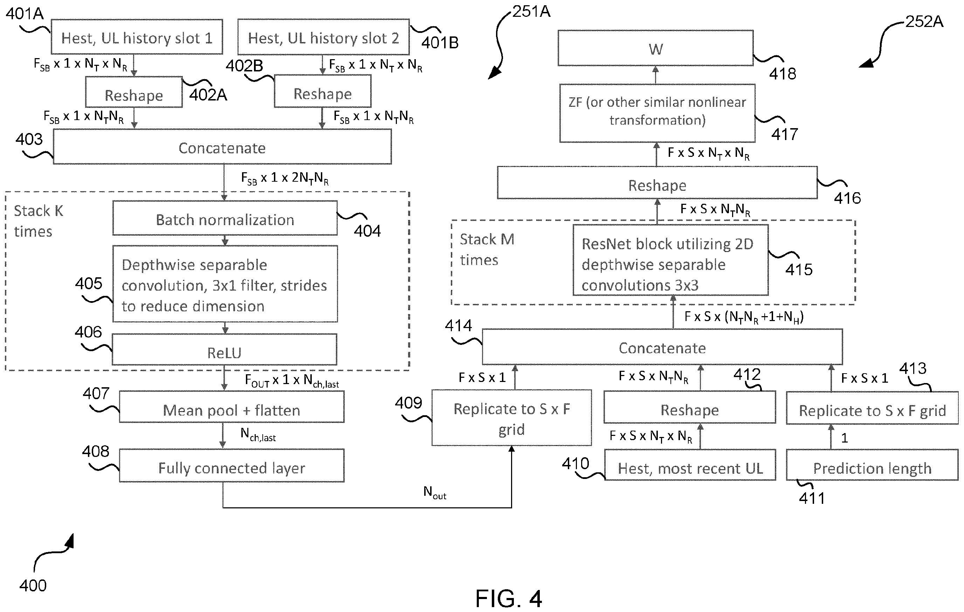

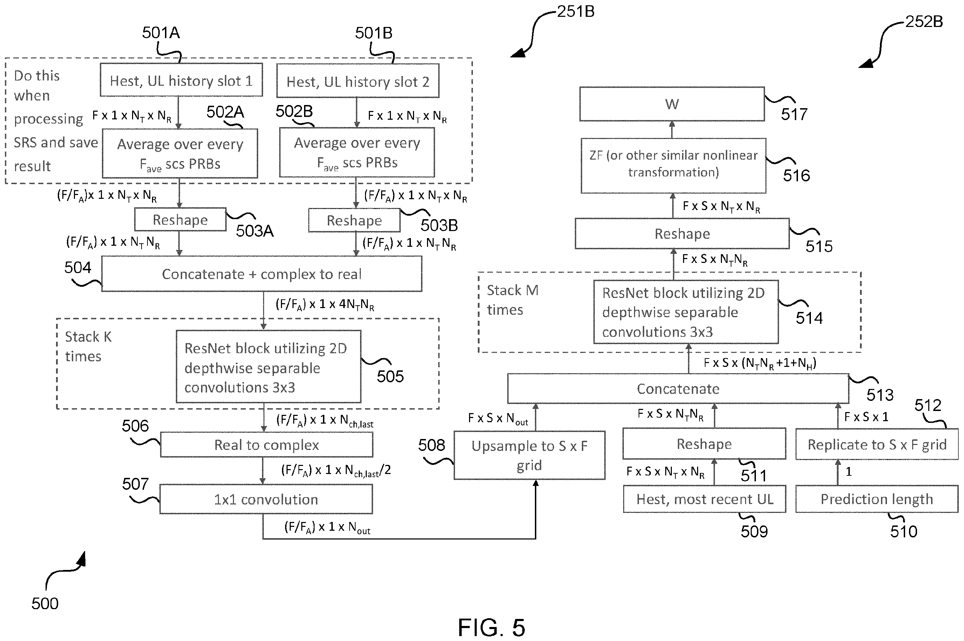

Diagram 400 of Fig. 4 illustrates a first disclosed example architecture, and diagram 500 of Fig. 5 illustrates a second disclosed example architecture.

As discussed above, the disclosed procedure may be run in network node device 120, such as a base station, and does not require additional information from client devices 130A, 130B, 130C. E.g., two historical channel estimates may be used. However, other lengths of history may be used instead.

Diagram 400 shows an example architecture of neural beamformer 252A and small CNN 251A (e.g., a branch processing historical UL channel estimates). Small CNN 251A may include, e.g., input blocks 401A and 401B (channel estimate Hest for the first and second prior UL slots, respectively), reshape functions 402A and 402B, concatenate function 403, batch normalization function 404, block 405 including a depthwise separable convolution and a 3x1 filter and strides, rectified linear unit 406, mean pool and flatten function 407, and/or fully connected layer 408. Neural beamformer 252A may include, e.g., replicate functions 409 and 413, input block 410 (channel estimate Hest for the most recent UL slot), input block 411 (prediction length), reshape function 412, concatenate function 414, deep residual learning network (ResNet) block 415 utilizing two-dimensional depthwise separable convolutions, reshape function 416, zero-forcing precoder 417, and/or output block 418 (beamforming weights / coefficients).

The convolutions in block 405 may process a reduced amount of SRS channel information. For example, averaging channel estimates over one or two PRBs may be utilized.

In the examples of diagram 400 and 500, small CNNs 251A, 251B may employ depth-wise separable convolutions as those may also be used in neural beamformers 252A, 252B.

The example of diagram 400 utilizes strides in block 405 to reduce the dimension (in an F-axis) between layers, but other options such as pooling may also be possible. The output of the last convolution may include a pooling layer 407, which may take a mean over the F-axis which may then be fed to a fully connected layer 408 producing a vector Nₒᵤₜ of a few elements. The vector may Nₒᵤₜ then be fed to neural beamformer 252A similar to prediction length 411, i.e., by replicating 409 the vector Nₒᵤₜ over an FxS grid and concatenating 414 with other inputs 410 and 411.

In the example of diagram 400, historical channel estimates may be based on one-pilot configurations (e.g., SRS) and therefore, the convolutions applied to the concatenated history may be effectively carrying a one-dimensional convolution in F dimensions (Hest may be interpolated to subcarriers not carrying pilots). Furthermore, neural network 251A processing the historical information may process a subband of SRS references. The most recent channel estimate Hest may be interpolated to the whole F x S when input 410 to neural beamformer 252A.

The example of diagram 500 utilizes a different approach in which an SRS channel estimate is first averaged over a number of subcarriers (e.g., over each PRB) and then fed to CNN 251B which may be built of a few ResNet blocks, for example.

Small CNN 251B may include, e.g., input blocks 501A and 501B (channel estimate Hest for the first and second prior UL slots, respectively), averaging functions 502A and 502B, reshape functions 503A and 503B, block 504 including a concatenate function and a complex values to real values -transformation, ResNet block 505 utilizing two-dimensional depthwise separable convolutions, real values to complex values -transformation 506, and/or 1x1 convolution 507. Neural beamformer 252B may include, e.g., upsampling function 508, input block 509 (channel estimate Hest for the most recent UL slot), input block 510 (prediction length), reshape function 511, replicate function 512, concatenate function 513, ResNet block 514 utilizing two-dimensional depthwise separable convolutions, reshape function 515, zero-forcing precoder 516, and/or output block 517 (beamforming weights / coefficients).

In the example of diagram 500, historical channel estimates may also be based on one-pilot configurations, such as SRS. When SRS channel estimates are calculated from an UL / special slot, those may first be averaged over Fₐᵥₑ subcarriers (e.g., over each PRB) and the low-dimensional averaged results may be saved to memory 202. In DL, these may be loaded and fed to neural beamformer 252B, as shown in Fig. 5.

Training of neural networks 251, 251A, 251B, 252, 252A, 252B may be performed by using a cross-entropy loss measuring DL performance of client devices 130A, 130B, 130C. As discussed above, CNN 251, 251A, 251B may be trained simultaneously with neural beamformer 252, 252A, 252B to allow the history to be simulated during the training.

At least in some embodiments, historical UL slots may be processed with a recurrent neural network (RNN), such as a long short-term memory network (LSTM). The UL channel estimates (or a subband of them) may be fed to an input of the RNN each time an UL slot is processed, and the output of the RNN may be fed to neural beamformer 252, 252A, 262B.

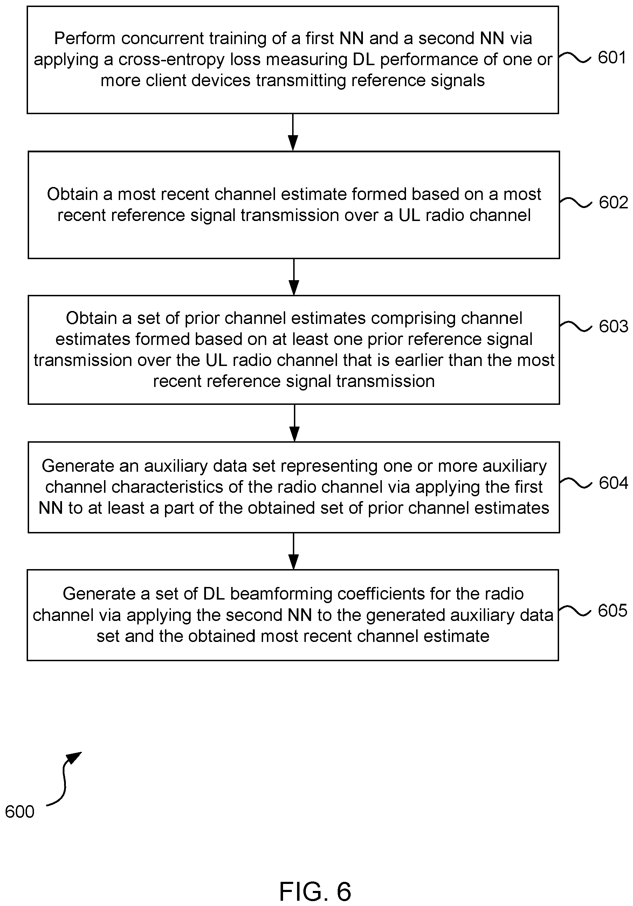

Fig. 6 illustrates an example flow chart of a method 600 for radio transmitter device 200, in accordance with an example embodiment.

At optional operation 601, radio transmitter device 200 may perform concurrent training of first NN 251, 251A, 251B and second NN 252, 252A, 252B via applying a cross-entropy loss measuring DL performance of one or more client devices 130A, 130B, 130C transmitting reference signals.

At operation 602, radio transmitter device 200 obtains a most recent channel estimate formed based on a most recent reference signal transmission over a UL radio channel.

At operation 603, radio transmitter device 200 obtains a set of prior channel estimates comprising channel estimates formed based on at least one prior reference signal transmission over the UL radio channel that is earlier than the most recent reference signal transmission.

At operation 604, radio transmitter device 200 generates an auxiliary data set representing one or more auxiliary channel characteristics of the radio channel via applying first NN 251, 251A, 251B to at least a part of the obtained set of prior channel estimates. As discussed above in more detail, first NN 251, 251A, 251B is configured to extract information related to the one or more auxiliary channel characteristics of the radio channel from the obtained set of prior channel estimates.

At operation 605, radio transmitter device 200 generates a set of DL beamforming coefficients for the radio channel via applying second NN 252, 252A, 252B to the generated auxiliary data set and the obtained most recent channel estimate.

Embodiments and examples with regard to Fig. 6 may be carried out by radio transmitter device 200 of Fig. 2. Operations 601-605 may, for example, be carried out by at least one processor 202 and at least one memory 204. Further features of method 600 directly resulting from the functionalities and parameters of radio transmitter device 200 are not repeated here. Method 600 can be carried out by computer program(s) or portions thereof.

Another example of an apparatus suitable for carrying out the embodiments and examples with regard to Fig. 6 comprises means for:
obtaining, at operation 602, a most recent channel estimate formed based on a most recent reference signal transmission over an UL radio channel;
obtaining, at operation 603, a set of prior channel estimates comprising channel estimates formed based on at least one prior reference signal transmission over the UL radio channel that is earlier than the most recent reference signal transmission;
generating, at operation 604, an auxiliary data set representing one or more auxiliary channel characteristics of the radio channel via applying first NN 251, 251A, 251B to at least a part of the obtained set of prior channel estimates, the first NN 251, 251A, 251B being configured to extract information related to the one or more auxiliary channel characteristics of the radio channel from the obtained set of prior channel estimates; and
generating, at operation 605, a set of DL beamforming coefficients for the radio channel via applying second NN 252, 252A, 252B to the generated auxiliary data set and the obtained most recent channel estimate.

The functionality described herein can be performed, at least in part, by one or more computer program product components such as software components. According to an embodiment, radio transmitter device 200 may comprise a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), Tensor Processing Units (TPUs), and Graphics Processing Units (GPUs).

In the disclosed example embodiments, it may be possible to train one ML model / NN with a specific architecture, then derive another ML model / NN from that using processes such as compilation, pruning, quantization or distillation. The ML model / NN may be executed using any suitable apparatus, for example a CPU, GPU, ASIC, FPGA, compute-in-memory, analog, or digital, or optical apparatus. It is also possible to execute the ML model / NN in an apparatus that combines features from any number of these, for instance digital-optical or analog-digital hybrids. In some examples, weights and required computations in these systems may be programmed to correspond to the ML model / NN. In some examples, the apparatus may be designed and manufactured so as to perform the task defined by the ML model / NN so that the apparatus is configured to perform the task when it is manufactured without the apparatus being programmable as such.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. A radio transmitter device (200), comprising:
at least one processor (202); and
at least one memory (204) storing instructions that, when executed by the at least one processor (202), cause the radio transmitter device (200) at least to perform:
obtaining a most recent channel estimate formed based on a most recent reference signal transmission over an uplink, UL, radio channel;
obtaining a set of prior channel estimates comprising channel estimates formed based on at least one prior reference signal transmission over the UL radio channel that is earlier than the most recent reference signal transmission;
generating an auxiliary data set representing one or more auxiliary channel characteristics of the radio channel via applying a first neural network, NN, (251, 251A, 251B) to at least a part of the obtained set of prior channel estimates; and
generating a set of downlink, DL, beamforming coefficients for the radio channel via applying a second NN (252, 252A, 252B) to the generated auxiliary data set and the obtained most recent channel estimate,
wherein the first NN (251, 251A, 251B) is configured to extract information related to the one or more auxiliary channel characteristics of the radio channel from the obtained set of prior channel estimates.

2. The radio transmitter device (200) according to claim 1, wherein the channel estimates in the set of prior channel estimates comprise at least channel estimate averages over one or more subcarriers of the at least one prior reference signal transmission.

3. The radio transmitter device (200) according to claim 1 or 2, wherein the at least one prior reference signal transmission comprises a sounding reference signal, SRS, transmission.

4. The radio transmitter device (200) according to any of claims 1 to 3, wherein the auxiliary data set has dimensions smaller than dimensions of a full channel estimate.

5. The radio transmitter device (200) according to claim 4, wherein the auxiliary data set comprises a vector with the dimensions smaller than the dimensions of the full channel estimate.

6. The radio transmitter device (200) according to any of claims 1 to 5, wherein the applying of the first NN (251, 251A, 251B) to the at least part of the obtained set of prior channel estimates to generate the auxiliary data set comprises applying the first NN (251, 251A, 251B) to a subset of the obtained set of prior channel estimates.

7. The radio transmitter device (200) according to any of claims 1 to 6, wherein the auxiliary channel characteristics of the radio channel comprise velocity estimates of one or more client devices (130A, 130B, 130C) transmitting the reference signals.

8. The radio transmitter device (200) according to any of claims 1 to 7, wherein the instructions, when executed by the at least one processor (202), further cause the radio transmitter device (200) to perform applying the first NN (251, 251A, 251B) to environmental information related to at least one of the radio channel or one or more client devices (130A, 130B, 130C) transmitting the reference signals, when generating the auxiliary data set.

9. The radio transmitter device (200) according to any of claims 1 to 8, wherein the first NN (251, 251A, 251B) comprises at least one of a convolutional neural network, CNN, a transformer network, or a recurrent neural network, RNN, or a combination thereof.

10. The radio transmitter device (200) according to any of claims 1 to 9, wherein the second NN (252, 252A, 252B) comprises at least one of a convolutional neural network, a transformer neural network, or a combination thereof.

11. The radio transmitter device (200) according to any of claims 1 to 10, wherein at least one of the first NN (251, 251A, 251B) or the second NN (252, 252A, 252B) utilizes one or more depthwise separable convolutions.

12. The radio transmitter device (200) according to any of claims 1 to 11, wherein the instructions, when executed by the at least one processor (202), further cause the radio transmitter device (200) to perform concurrent training of the first NN (251, 251A, 251B) and the second NN (252, 252A, 252B) via applying a cross-entropy loss measuring DL performance of one or more client devices (130A, 130B, 130C) transmitting the reference signals.

13. A method (600), comprising:
obtaining (602), by a radio transmitter device (200), a most recent channel estimate formed based on a most recent reference signal transmission over an uplink, UL, radio channel;
obtaining (603), by the radio transmitter device (200), a set of prior channel estimates comprising channel estimates formed based on at least one prior reference signal transmission over the UL radio channel that is earlier than the most recent reference signal transmission;
generating (604), by the radio transmitter device (200), an auxiliary data set representing one or more auxiliary channel characteristics of the radio channel via applying a first neural network, NN, (251, 251A, 251B) to at least a part of the obtained set of prior channel estimates; and
generating (605), by the radio transmitter device (200), a set of downlink, DL, beamforming coefficients for the radio channel via applying a second NN (252, 252A, 252B) to the generated auxiliary data set and the obtained most recent channel estimate,
wherein the first NN (251, 251A, 251B) is configured to extract information related to the one or more auxiliary channel characteristics of the radio channel from the obtained set of prior channel estimates.

14. An apparatus, comprising means for carrying out the method (600) according to claim 13.

15. A computer program comprising instructions for causing a radio transmitter device to perform at least the following:
obtaining a most recent channel estimate formed based on a most recent reference signal transmission over an uplink, UL, radio channel;
obtaining a set of prior channel estimates comprising channel estimates formed based on at least one prior reference signal transmission over the UL radio channel that is earlier than the most recent reference signal transmission;
generating an auxiliary data set representing one or more auxiliary channel characteristics of the radio channel via applying a first neural network, NN, to at least a part of the obtained set of prior channel estimates; and
generating a set of downlink, DL, beamforming coefficients for the radio channel via applying a second NN to the generated auxiliary data set and the obtained most recent channel estimate,
wherein the first NN is configured to extract information related to the one or more auxiliary channel characteristics of the radio channel from the obtained set of prior channel estimates.
